# EUROPEAN PATENT APPLICATION

(11) **EP 0 823 304 A1**
(43) Date of publication of application: **11.02.1998**
(21) Application number: 97113775.7
(22) Date of filing: 08.08.1997
(51) Int. Cl.: B23K 26/06

(54) **Laser optical system including beam splitting mirror with separate members providing divisions of reflecting surface, and welding apparatus and method using the laser optical system**

(30) Priority: 09.08.1996 JP 211098/96; 23.05.1997 JP 133738/97
(71) Applicant: Toyota Jidosha Kabushiki Kaisha, Toyota-shi, Aichi-ken 471-71 (JP)
(72) Inventor: Esaka, Fumikatsu, Toyota-shi, Aichi-ken (JP); Takasago, Toshiyuki, Toyota-shi, Aichi-ken (JP)
(74) Representative: Leson, Thomas Johannes Alois, Dipl.-Ing.

(57) **Abstract**

Laser optical system including a laser source (12) for generating a laser beam (L0), and a beam splitting mirror (14, 122) for splitting the generated laser beam into a plurality of sub-beams (L1, L2) having respective different optical axes, the beam splitting mirror having a reflecting surface (34) consisting of a plurality of divisions corresponding to the sub-beams, and including a plurality of separate members (30, 32, 124, 126) which are assembled so as to provide the divisions (36, 38, 128, 130) of the reflecting surface, respectively. Also disclosed are laser welding apparatus and method using the laser optical system.

## Description

This application is based on Japanese Patent Applications No. 8-211098 filed August 9, 1996 and No. 9-133738 filed May 23, 1997, the contents of which are incorporated hereinto by reference.

### BACKGROUND OF THE INVENTION

### Field of the Invention

The present invention relates to techniques for splitting a laser beam into sub-beams by using a mirror.

### Discussion of the Related Art

An optical system using a laser beam is used in a laser processing apparatus which is adapted to perform various operations with a laser beam, such as welding, cutting or machining, surface treatment and boring. Such a laser optical system is also used in an inspecting or testing instrument and a speed detecting instrument.

There is known a laser optical system of the type in which a laser beam is split into sub-beams by a mirror, as disclosed in JP-U-62-105780 (publication of Japanese Utility Model Application laid open in 1987). Generally, this type of laser optical system includes (a) a laser source for generating a laser beam, and (b) a beam reflecting and splitting mirror which has a reflecting surface consisting of a plurality of divisions for reflecting the laser beam while splitting it into respective sub-beams which have respective different optical axes. Where the laser optical system of this type is used to perform an operation on a workpiece, the sub-beams irradiate respective different areas or spots of a surface of the workpiece.

In the laser optical system of the type described above, it is desired to facilitate changes in the arrangement of the spots of the sub-beams, more specifically, in the relative position and distance of the spots, and the position and direction of arrangement of the spots relative to the workpiece. In the conventional system as disclosed in the above-identified publication, the beam reflecting and splitting mirror is an integral structure wherein the divisions of the reflecting surface are not displaceable relative to each other. Therefore, when different arrangements of the spots of the sub-beams are required, the optical system requires different beam reflecting and splitting mirrors having different arrangements of the divisions of the reflecting surface. Accordingly, the mirror should be changed as needed, and the mirror and the laser optical system suffer from low versatility.

### SUMMARY OF THE INVENTION

It is therefore a first object of this invention to provide a laser optical system wherein the beam reflecting and splitting mirror has a high degree of versatility.

It is a second object of the invention to provide a laser welding apparatus including such a laser optical system.

It is a third object of the invention to provide a laser welding method using the laser optical system of the invention.

The first object indicated above may be achieved according to any one of the following forms, embodiments, features or modes of the present invention (hereinafter referred to as "formed of the invention"). These forms of the invention are numbered, and the dependency of one form upon another form is indicated where appropriate, as in the appended claims, to indicate possible combinations of the various forms of the invention.
(1) A laser optical system including a laser source for generating a laser beam, and a beam splitting mirror for splitting the laser beam generated by the laser source into a plurality of sub-beams having respective different optical axes, the beam splitting mirror having a reflecting surface including a plurality of divisions corresponding to the plurality of sub-beams, wherein the beam splitting mirror includes a plurality of separate members which are assembled so as to provide the plurality of divisions of the reflecting surface, respectively.
   In the laser optical system according to the above form (1) of the present invention, the separate members are assembled into the beam splitting mirror, so as to provide the respective divisions of the reflecting surface of the beam splitting mirror. Since the separate members of the mirror are displaceable relative to each other, the relative position of the surfaces of the divisions of the reflecting surface can be changed to change, as needed, the arrangement of the spots of a plurality of sub-beams reflected by the respective divisions of the reflecting surface. Thus, the beam splitting mirror has an increased degree of versatility.
   Further, one of the plurality of separate members of the beam splitting mirror can be replaced by another member, whereby the versatility of the beam splitting mirror is further improved.
(2) A laser optical system according to the above-indicated form (1), wherein the plurality of separate members are constructed and assembled so as to permit a change in at least one of (a) an angle of an axis of each of at least one of the plurality of sub-beams with respect to an axis of the laser beam incident upon the reflecting surface of the beam splitting mirror, and (b) a relative position of the plurality of divisions in a direction of the axis of the laser beam incident upon the reflecting surface.
(3) A laser optical system according to the above-indicated form (1) or (2), wherein the plurality of separate members provide at least one planar boundary surface intersecting the reflecting surface of the beam splitting mirror, so as to define at least one straight line of intersection therebetween, which serves as at least one straight boundary line which divides the reflecting surface into the plurality of divisions.
   In the above form (3), the plurality of separate members of the beam splitting mirror may provide one planar boundary surface at which the mirror is divided into the separate members which are displaceable relative to each other. The planar boundary surface intersecting the reflecting surface provides one straight boundary line which divides the reflecting surface into the two divisions. When it is desired to obtain the two divisions having different surface areas, the straight boundary line is positioned pass a point which is offset from the center of the reflecting surface of the mirror, so that the straight boundary line cooperates with the periphery of the reflecting surface to define the two divisions one of which has a smaller surface area than the other. The division having the smaller surface area is offset from the center of the reflecting surface.
(4) A laser optical system according to the above-indicated form (1) or (2), wherein the plurality of separate members provides at least one cylindrical boundary surface intersecting the reflecting surface of the beam splitting mirror, so as to define at least one loop of intersection therebetween, the at least one loop serving as at least one boundary loop which divides the reflecting surface into the plurality of divisions.
   In the above form (5) of the laser optical system, the beam splitting mirror includes the plurality of separate members which are assembled such that the adjacent separate members slidably contact each other at the corresponding cylindrical boundary surface and such that one of the adjacent separate members functions to guide the other member. This arrangement does not require an exclusive mechanism for enabling the separate members to be displaceable relative to each other. Accordingly, the beam splitting mirror can be simplified in construction, while exhibiting a high degree of versatility regarding the arrangement of the spots of the sub-beams reflected by the divisions of the reflecting surface.
   It is noted that the diameter of a laser beam generated by the laser source varies with a change in the energy of the laser beam. Therefore, the energy of the laser beam at an outer portion of the reflecting surface of the beam splitting mirror considerably varies due to a change in the diameter of the laser beam. Hence, in the case where the reflecting surface is divided by a straight boundary line into the two divisions, as described above with respect to the above-discussed form (3), a portion of the laser beam whose energy considerably varies due to a change in the laser beam diameter is incident upon the division of the reflecting surface whose surface area is smaller. Accordingly, the energy at the spot of the sub-beam reflected by the above-indicated small division of the reflecting surface is relatively likely to vary due to a change in the laser beam diameter. This is not desirable for the laser optical system to attain the desired object with high stability or reliability.
   Unlike the beam splitting mirror according to the above form (3), the beam splitting mirror according to the above form (4) is not required to locate the smaller division at a position offset from the center of the reflecting surface, and is suitable for providing the smaller division in the central portion of the reflecting surface which is less likely to be influenced by a change in the diameter of the laser beam.
   Thus, the amounts of energy at the spots of the sub-beams can be easily stabilized, irrespective of the surface area of the divisions of the reflecting surface of the beam splitting mirror.
(5) A laser optical system according to the above-indicated form (4), wherein the beam splitting mirror consists of a parabolic mirror having a parabolic reflecting surface for condensing and reflecting the incident laser beam, the parabolic mirror including an outer member having a cylindrical center bore, and an inner member which is fitted in the cylindrical center bore such that the inner and outer members are displaceable relative to each other, the outer member providing an annular outer reflecting surface while the inner member providing a circular inner reflecting surface which cooperates with the annular outer reflecting surface to form the parabolic reflecting surface of the parabolic mirror.
(6) A laser optical system according to the above-indicated form (4), wherein the beam splitting mirror consists of a plane mirror having a flat reflecting surface for reflecting the incident beam, the plane mirror including an outer member having a cylindrical center bore, and an inner member which is fitted in the cylindrical center bore such that the inner and outer members are displaceable relative to each other, the outer member providing an annular outer reflecting surface while the inner member providing a circular inner reflecting surface which cooperates with the annular outer reflecting surface to form the flat reflecting surface of the plane mirror.
(7) A laser optical system according to any one of the above-indicated forms (1) through (6), further including a position adjusting mechanism for adjusting a relative position of the plurality of separate members of the beam splitting mirror.
   In the laser optical system according to the above form (7), the relative position of the plurality of separate members of the beam splitting mirror can be changed by operation of the position adjusting mechanism, whereby the relative position of the divisions of the reflecting surface of the mirror can be easily changed depending upon the particular application of the system. Thus, the versatility of the beam splitting mirror is significantly improved.
   The second object indicated above may be achieved according to any one of the following forms of the present invention:
(8) A laser welding apparatus for welding together two workpieces with a laser, comprising: (a) a welding head including a laser optical system defined in any one of claims 1-7, for forming spots of the plurality of sub-beams on surfaces of the two workpieces, such that the spots have centers which are spaced apart from each other; and (b) a relative movement device for moving the spots of the plurality of sub-beams and the two workpieces relative to each other.
   According to the laser welding apparatus of the present invention, the arrangement of the spots of the sub-beams can be readily changed as needed, owing to the beam splitting mirror constructed as described above, and the laser welding apparatus is capable of a variety of welding operations with different arrangements of the sub-beam spots. Thus, the versatility of the welding apparatus is improved in terms of its welding function and the kinds of the workpieces that can be dealt with.
(9) A laser welding apparatus according to the above-indicated form (8), wherein the relative movement device comprises a feeding device for effecting a relative movement of the spots of the plurality of sub-beams and the two workpieces such that the spots are moved relative to the two workpieces, in a direction parallel to a predetermined welding line along which the two workpieces are welded together.
(10) A laser welding apparatus according to the above-indicated form (8) or (9), wherein the relative movement device comprises an oscillating device for effecting a relative movement of the spots of the plurality of sub-beams and the two workpieces such that the spots are oscillated in a direction intersecting a predetermined welding line along which the two workpieces are welded together, and such that a center of an oscillating stroke of each of the spots is substantially aligned with the welding line.
(11) A laser welding apparatus according to any one of the above-indicated forms (8) through (10), further comprising a positioning device for adjusting a distance between the welding head and the surfaces of the two workpieces.
   The third object indicated above may be achieved according to any one of the following forms of the invention:
(12) A laser welding method of welding together two workpieces with a laser, by using a laser welding apparatus defined in any one of claims 8-11.
(13) A laser welding method according to the above-indicated form (12), wherein the plurality of sub-beams consist of two sub-beams reflected by respective two divisions of the beam splitting mirror, and the spots of the two sub-beams are arranged in a direction parallel to a predetermined welding line along which the two workpieces are welded together, the spots, being spaced apart from each other in the direction parallel to the predetermined welding line, and fed by the relative movement device relative to the two workpieces along the welding line.
   In one arrangement of the above form (13), the two divisions of the beam splitting mirror are determined so that one of the two sub-beams whose spot precedes or leads the spot of the other sub-beam has a larger amount of energy at its spot than that of the other sub-beam at its spot. In this arrangement, the workpieces are initially subjected to preliminary heating by the leading spot of the above-indicated one sub-beam, and are subsequently subjected to welding by the trailing spot of the other sub-beam.
(14) A laser welding method according to the above-indicated form (12), wherein the plurality of sub-beams consist of two sub-beams reflected by respective two divisions of the beam splitting mirror, and the spots of the two sub-beams are arranged in a direction parallel to a predetermined welding line along which the two workpieces are welded together, the spots being spaced apart from each other in the direction parallel to the predetermined welding line, the spots being fed relative to the two workpieces along the welding line while being oscillated across the welding line, by the relative movement device.
   The laser welding method according to the present form (14) of the invention permits excellent butt welding of the two workpieces, even in the presence of some butting gap at the interface of the two workpieces, since the oscillation of the spots of the sub-beams across the welding line is effective to prevent the spots from remaining in alignment with the butting gap and thereby reduce the amount of the light passing through the butting gap.
(15) A laser welding method according to the above-indicated form (14), wherein the spots are moved along respective two paths on the surfaces of the two workpieces such that each of the two paths intersects the welding line at a predetermined interval in the direction parallel to the welding line, the two paths having a phase difference corresponding to a half of the predetermined interval.
   In the above method, the velocity of movement of each sub-beam spot is maximum at each point of intersection with of its path with the welding line, and the amount of energy of the sub-beam per unit time is minimum at the point of intersection. However, since the paths of the spots of the two sub-beams intersect each other on the welding line, the total amount of energy of the two sub-beams near the welding line is sufficiently large. Further, since the phase difference of the paths of the two sub-beam spots corresponds to the half of the intersecting interval, each half-interval segment of one of the two paths is interposed between the adjacent half-interval segments of the other path, whereby the two spots evenly occupy the surface areas of the workpieces on the opposite side of the welding line along which the workpieces are butt-welded. Accordingly, those surface areas can be uniformly irradiated by the two sub-beams whose spots are moved along the respective paths. The present method assures reliable butt welding of the workpieces, without having to reduce the velocity of movement of the sub-beam spots, namely, without having to reduce the welding speed.
(16) A laser welding method according to the above-indicated form (12), wherein the plurality of sub-beams consist of two sub-beams reflected by respective two divisions of the beam splitting mirror, and the spots of the two sub-beams are arranged in a direction intersecting a predetermined welding line along which the two workpieces are welded together, the spots having centers on opposite sides of the welding line, and being fed by the relative movement device relative to the two workpieces in a direction parallel to the welding line.
   Where the spots of the sub-beams are arranged along the welding line, it is desirable to oscillate the spots across the welding line with the midpoint of the oscillating stroke being substantially located on the welding line, for improving the welding stability. In the above form (17) of this invention wherein the spots of the sub-beams are arranged in the direction intersecting the welding line, it is sufficient to feed the spots along the welding line without the oscillation of the spots. Accordingly, the present method does not require an oscillating device for oscillating the spots, and makes it possible to reduce the cost and weight of the laser welding apparatus. While the oscillating device may be used in this method, the load of the oscillating device is relatively low.
(17) A laser welding method according to the above-indicated form (16), wherein a distance between the welding head and the surfaces of the two workpieces is determined to be different from a focal length of the two sub-beams, so that a focal point of the two sub-beams is offset from the surfaces of the two workpeices on which the spots of the two sub-beams are formed, and wherein a spacing distance between the centers of the spots is determined such that the spots of the two sub-beams are at least continguous with each other, and cooperate to form a continuous area of irradiation by the sub-beams, which area extends across the welding line.
   In the method according to the above form of the invention, the need of oscillating the spots of the sub-beams across the welding line and the need of using the oscillating device are further reduced, because the two spots form a continuous area of irradiation is formed on the surfaces of the workpieces.
(18) A laser welding method according to the above-indicated form (16), wherein the two workpieces have respective end faces and are butt-welded together at the end faces and along the welding line, a spacing distance between the centers of the spots of the two sub-beams being determined such that the spots are located on opposite sides of the welding line and inwardly of the end faces, respectively.
   In the method according to the above form of the invention, the sub-beams do not at all pass through the butting gap between the two workpieces to be butt-welded together. Since the entirety of each sub-beam spot is located within the area of the corresponding workpiece, the appropriate local portion of the workpiece can be sufficiently fused, and the fused metal fills the butting gap, whereby the two workpieces can be adequately butt-welded together, without an undercut or other drawback. Thus, the present method permits butt-welding operation in a satisfactory manner, without oscillation of the sub-beam spots, even in the presence of some butting gap between the end faces of the workpieces.
(19) A laser welding method according to the above-indicated form (16) or (18), wherein two workpieces have respective end faces and are butt-welded together at the end faces and along the welding line, a spacing distance between the centers of the spots of the two sub-beams being determined such that plasmas generated by irradiation of local portions of the surfaces of the workpieces by the two sub-beams coalesce to form a substantially continuous plasma zone.

In the laser welding method according to the above form (19) of the invention, the butting gap can be filled with fused metal by effective utilization of the heat generated in the plasma zone. This method also permits satisfactory butt-welding operation even where some butting gap exists between the workpieces.

According to the present invention, there is also provided a laser welding method of butt-welding together two workpieces having respective end faces, wherein the workpieces are butted together at the end faces, and surfaces of the two workpieces are irradiated with a laser along a predetermined welding line along which the two workpieces are butt-welded, the laser welding method comprising the steps of: positioning spots of two laser beams formed on the surfaces of the two workpieces such that the spots are arranged in a direction parallel to the predetermined welding line, and have respective centers on opposite sides of the welding line; determining a spacing distance between the centers of the spots such that each of the spots is located inwardly of a corresponding one of the end faces; and moving the spots and the two workpieces relative to each other along the welding line.

In the method described above, the sub-beams do not at all pass through the butting gap between the two workpieces to be butt-welded together. Since the entirety of each sub-beam spot is located within the area of the corresponding workpiece, the appropriate local portion of the workpiece can be sufficiently fused, and the fused metal fills the butting gap, whereby the two workpieces can be adequately butt-welded together, without an undercut or other drawback. Thus, the present method permits butt-welding operation in a satisfactory manner, without oscillation of the sub-beam spots, even in the presence of some butting gap between the end faces of the workpieces.

In one arrangement of the above laser welding method, the spacing distance is determined such that plasmas generated by irradiation of local portions of the surfaces of the workpieces by the two sub-beams coalesce to form a substantially continuous plasma zone.

In the above arrangement, the butting gap can be filled with fused metal by effective utilization of the heat generated in the plasma zone. This method also permits satisfactory butt-welding operation even where some butting gap exists between the workpieces.

### BRIEF DESCRIPTION OF THE DRAWINGS

The above and optional objects, features, advantages and technical and industrial significance of the present invention will be better understood by reading the following detailed description of presently preferred embodiments of the invention, when considered in connection with the accompanying drawings, in which:
Fig. 1 is a perspective view showing one embodiment of a laser welding apparatus of the present invention;
Fig. 2A is an enlarged plan view of a parabolic mirror used in the apparatus of Fig. 1, and 2B is a sectional side elevational view in cross section of the parabolic mirror;
Figs. 3A and 3B are front and side elevational views, respectively, for explaining the principle of laser beam splitting by the parabolic mirror;
Fig. 4 is a perspective view indicating three planes with respect to which a welding head of the laser welding apparatus is positioned;
Fig. 5A is a plan view of the parabolic mirror, and Figs. 5B and 5C are cross sectional views taken along lines A-A and B-B of Fig. 5A;
Fig. 6 is a plan view for explaining relative position of sub-beam spots P1, P2 formed on the surfaces of two workpieces by two sub-beams reflected from the parabolic mirror shown in Figs. 5A, 5B and 5C;
Figs. 7A, 7B and 7C are perspective, side elevational and plan views, respectively, showing the parabolic mirror and an oscillating plane mirror of the laser welding apparatus, and explaining the principle of the laser beam splitting;
Fig. 8 is a plan view indicating paths of the spots of the two sub-beams formed on the surfaces of the two workpieces by the welding apparatus;
Fig. 9 is a perspective view showing another embodiment of the laser welding apparatus of this invention;
Fig. 10 is a plan view indicating the spots of the sub-beams formed on the surfaces of the two workpieces by the laser welding apparatus of Fig. 9;
Fig. 11 is a view schematically showing a further embodiment of the laser welding apparatus of the invention;
Fig. 12 is a perspective view showing a still further embodiment of the laser welding apparatus of the invention;
Fig. 13 is a plan view indicating the relative position of the spots of the two sub-beams formed on the surfaces of the two workpieces by the laser welding apparatus of Fig. 12, and a zone in which plasma is generated by irradiation with the sub-beams;
Fig. 14 is a front elevational view showing an example of butt welding by the laser welding apparatus of Fig. 12;
Fig. 15 is a front elevational view showing another example of butt welding by the apparatus of Fig. 12;
Fig. 16 is a front elevational view showing a further example of butt welding by the apparatus of Fig. 12;
Fig. 17 is a graph for explaining an improvement of tolerance of workpiece butting gap, which is provided as an advantage of the laser welding apparatus of fig. 12;
Fig. 18 is a graph for explaining an improvement of tolerance of misalignment of the sub-beam spots with respect to the workpiece butting line, which is provided as another advantage of the apparatus of Fig. 12;
Fig. 19 is a front elevational view schematically illustrating a twin-focus type laser welding apparatus constructed according to a yet further embodiment of this invention; and
Fig. 20 is a plan view indicating the relative position of the spots of the two sub-beams formed on the surfaces of the two workpieces by the laser welding apparatus of Fig. 19, and a zone in which plasma is generated by irradiation with the sub-beams.

### DETAILED DESCRIPTION OF THE PREFERRED EMBODIMENTS

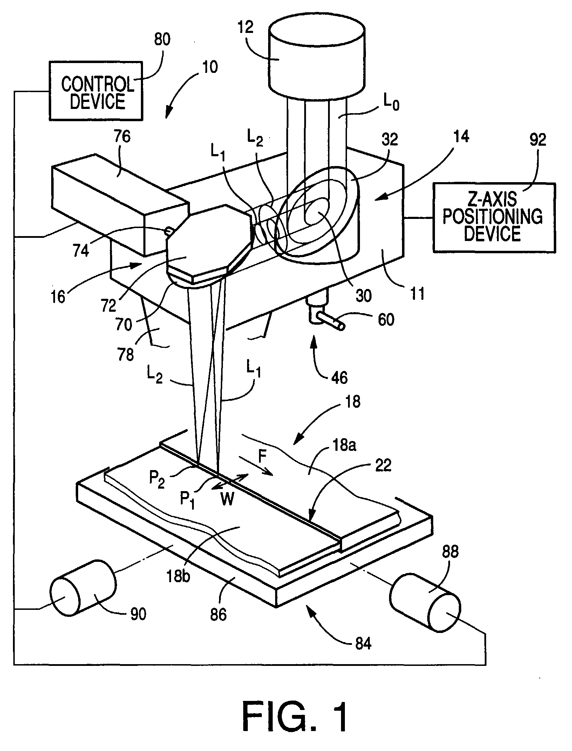

Referring first to Fig. 1, there is shown a laser welding apparatus including a laser optical system constructed according to one embodiment of this invention. The laser welding apparatus is equipped with a laser welding head 10 incorporating the laser optical system wherein a generated laser beam is condensed and reflected to irradiate a local portion of a workpiece 18. The laser welding head 10 includes a frame 11, a laser source 12, a beam splitting mirror in the form of a parabolic mirror 14, and an oscillating mirror in the form of a plane mirror 16. The laser source 12 is adapted to generate a laser beam, such as carbon dioxide gas laser, in the form of coherent parallel rays. The parabolic mirror 14 is disposed downstream of the laser source 12, and has a parabolic reflecting surface which reflects an entirety of the incident laser beam generated by the laser source 12. The reflecting surface is inclined by about 45° with respect to the axis of the incident laser beam.

The plane mirror 16 is disposed downstream of the parabolic mirror 14, and has a planar or flat reflecting surface which reflects an entirety of the laser beam reflected by the parabolic mirror 14. The reflecting surface is inclined by about 45° with respect to the axis of the laser beam reflected by the parabolic mirror 14. A predetermined local portion of a surface of the workpiece 18 is irradiated by the laser beam reflected by the plane mirror 16. The workpiece 18 consists of two workpieces 18a, 18b in the form of steel planes which are butted together. In the present embodiment, the laser welding apparatus is adapted to perform a butt welding operation to weld the two workpieces 18a, 18b together, along a predetermined line of welding 22. The welding operation is performed by moving the spot of the laser beam along the line of welding 22, so that the two workpieces 18a, 18b are fused under heat along the line of welding 22 and are thus welded together.

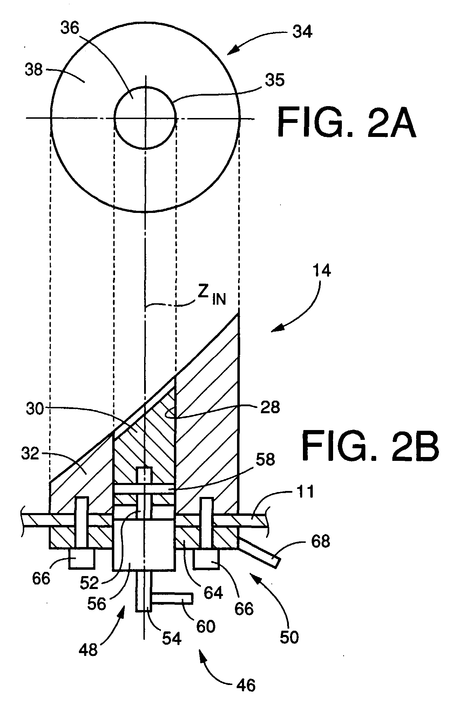

As shown in Figs. 2A and 2B, the parabolic mirror 14 includes two separate members which cooperate with each other to provide the reflecting surface 34. These two separate members consist of an inner member 30 and an outer member 32 which has a cylindrical center bore 28 having an axis aligned with an axis Z_{IN} of the incident laser beam (hereinafter referred to as "incident beam axis"). The inner and outer members 30, 32 have a circular shape and an annular shape, respectively, in transverse cross section. The inner member 30 is fitted in the cylindrical center bore 28.

The reflecting surface 34 of the parabolic mirror 34 consists of a circular inner portion 36 provided by the inner member 30, and an annular outer portion 38 provided by the outer member 32. These inner and outer portions 36, 38 are bounded by a boundary loop 35, which is a circle when the reflecting surface 34 is seen in the direction of the incident beam axis Z_{IN}. The inner and outer portions 36, 38 are both parabolic. The cylindrical center bore 28 provides a cylindrical boundary surface which provides the boundary loop 35 and which divides the parabolic mirror 14 into the inner and outer members 30, 32.

To manufacture the parabolic mirror 14, a precursor of the inner member 30 is initially fitted in a precursor of the outer member 32 such that these precursors are axially slidable and rotatable relative to each other. Then, the corresponding end faces of the two precursors are simultaneously machined and ground by suitable machines, to form parabolic surfaces which serve as the inner and outer portions 36, 38 of the reflecting surface 34 of the parabolic mirror 14, which are referred to as "reflecting surfaces of the inner and outer members 30, 32" or "inner and outer reflecting surfaces", where appropriate. Since the inner and outer reflecting surfaces 36, 38 are formed by the machining and grinding operations simultaneously performed on the two precursors, the time required for the manufacture of the parabolic mirror 14 can be made shorter, and the dimensional and configurational accuracy of the reflecting surfaces 36, 38 can be made higher to exhibit a higher degree of condensation of light , than in the case where the reflecting surfaces 36, 38 are formed independently of each other, before the precursors are assembled together, for instance.

The inner and outer members 30, 32 of the parabolic mirror 14 are axially displaceable and rotatable about the axis. As shown in Fig. 2, the outer member 32 is fixed to the frame 11, while the inner member 30 is connected to the outer member 32 through a position adjusting mechanism 46 which includes an axial positioning device 48 and an angular positioning device 50.

The axial positioning device 48 is constructed according to the principle of a micrometer wherein a distance of movement of a screw is proportional to an angle of rotation of the screw. The axial positioning device 48 includes (a) a spindle 52 movable in an axial direction, (b) an operating portion 54 rotated by the operator of the laser welding apparatus, and (c) a connecting and mounting portion 54 which operatively connects the spindle 52 and the operating portion 54 and which is fixedly supported by a rotary member 64. The connecting and mounting portion 54 is constructed such that the spindle 52 is axially movable but not rotatable relative to the portion 54, while the operating portion 54 is rotatable but not axially movable relative to the portion 54. The portion 54 is arranged so that the spindle 52 is axially moved when the operating portion 54 is rotated. The spindle 52 is fixed, at an end portion thereof remote from the connecting and mounting portion 56, to the inner member 30 by a pin 58 extending through the inner member 30 and the spindle 52, such that the spindle 52 is neither rotatable nor axially movable relative to the inner member 30. For facilitating the rotation of the operating portion 54, a lever 60 is fixed to the operating portion 54 such that the lever 60 extends in the radial direction of the operating portion 54.

On the other hand, the angular positioning device 50 includes the rotary member 64 to which is fixed the connecting and mounting portion 56 of the axial positioning device 48 so that the axial positioning device 48 is rotatable with the rotary member 64 of the angular positioning device 50. The rotary member 64 is fixed to the frame 11 by fastening means in the form of a plurality of screws 66, but is rotatable relative to the frame 11. Described in detail, the rotary member 64 has a plurality of elongate holes formed therethrough, so as to extend along a circle having a center on its axis. Each elongate hole has a width slightly larger than the diameter of the screws 66. The elongate holes are spaced apart from each other in the circumferential direction of, the rotary member 64. The screws 66 extend through the respective elongate holes and are screwed in the frame 11 and the outer member 32.

In the angular positioning device 50, the rotary member 64 may be rotated together with the inner member 30, relative to the outer member 32, after the screws 66 are loosened. Thus, the inner member 30 can be rotated relative to the outer member 32 by rotating the rotary member 64 together with the axial positioning device 48. After the inner member 30 is positioned relative to the outer member 32 in the circumferential direction, the inner member 64 is fixed to the outer member 32 by tightening the screws 64. To facilitate the rotation of the rotary member 64, a lever 68 is fixed to the rotary member 64, so as to extend in the radial direction of the rotary member 64.

As described above, the parabolic mirror 14 functioning as the beam reflecting and splitting mirror consists of the two separate inner and outer members 30, 32 which are axially movable and rotatable relative to each other by operating the axial and angular positioning devices 48, 50. Accordingly, the orientation of the reflecting surface 36 of the inner member 30 with respect to that of the reflecting surface 38 of the outer member 32, and the axial position of the inner member 30 relative to the outer member 32 in the direction of the axis Z_{IN} can be changed as needed, so that the relative position of spots P1, P2 of two sub-beams on the surface of the workpiece 18 can be changed by operating the axial and angular positioning devices 48, 50, as described below in detail.

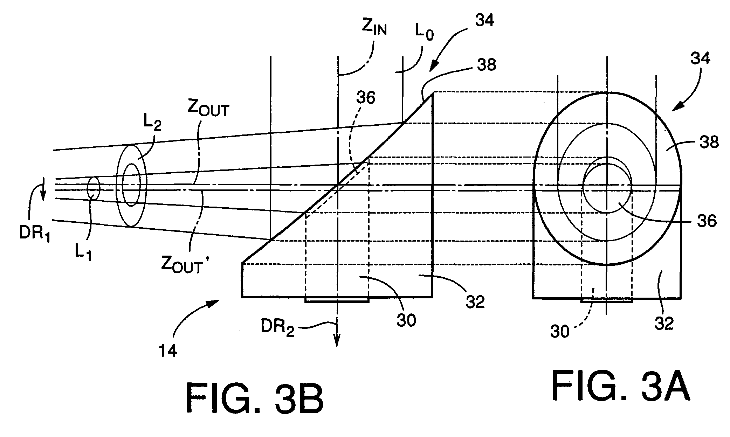

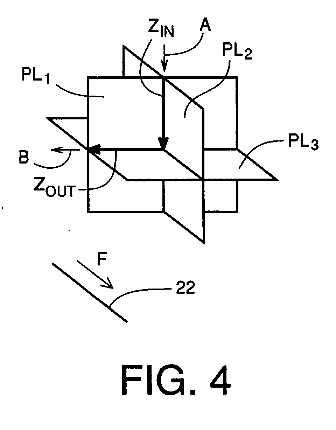

When the inner member 30 is axially moved downwards as indicated in Fig. 3B (without rotation relative to the outer member 32) from an initial position at which the inner reflecting surface 36 is flush with the outer reflecting surface 38, the axial position of the reflecting surface 36 on the incident beam axis Z_{IN} is lowered. As a result, an axis Z_{OUT'} of the laser beam reflected by the inner reflecting surface 36 is lowered relative to an axis Z_{OUT} of the laser beam reflected by the outer reflecting surface 38 as seen in Fig. 3B, that is, in a first plane PL1 which includes the incident beam axis Z_{IN} and the axis Z_{OUT} as shown in Fig. 4. The axis Z_{OUT} will be referred to as "primary reflected beam axis", while the axis Z_{OUT'} will be referred to as "secondary reflected beam axis". In this arrangement in which the inner reflecting surface 36 is located below the outer reflecting surface 38, the laser beam L0 generated by the laser source 12 is reflected and split into a first or inner sub-beam L1 having the secondary reflected beam axis Z_{OUT'} and a second or outer sub-beam L2 having the primary reflected beam axis Z_{OUT}. It is noted that a direction DR1 in which the secondary reflected beam axis Z_{OUT'} of the first sub-beam L1 is moved relative to the primary reflected beam axis Z_{OUT} of the second sub-beam L2 is the same as a direction DR2 in which the inner member 30 is moved relative to the outer member 32. The direction DR2 is parallel to the incident beam axis Z_{IN}.

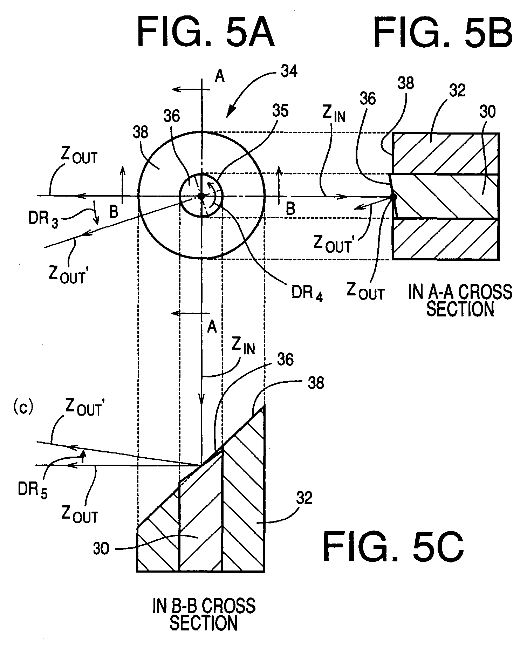

When the inner member 30 is rotated relative to the outer member 32, without axial relative movement thereof, from the initial position indicated above, as indicated in Figs. 5A, 5B and 5C, the angle of the secondary reflected beam axis Z_{OUT'} of the first sub-beam L1 relative to the incident beam axis Z_{IN} is changed, as viewed in Fig. 5B which is a cross sectional view taken along line A-A of Fig. 5A, that is, as viewed in a second plane PL2 which includes the incident beam axis Z_{IN} and which is perpendicular to the primary reflected beam axis Z_{OUT} of the second sub-beam L2, as indicated in Fig. 4. As a result, the angle of the secondary reflected beam axis Z_{OUT'} is rotated about the incident beam axis Z_{IN} relative to the primary reflected beam axis Z_{OUT}, in a third plane PL3 perpendicular to the incident beam axis Z_{IN} (as indicated in Fig. 4), as indicated in Fig. 5A corresponding to the third plane PL3. Consequently, the spots P1 and P2 of the two sub-beams L1, L2 reflected by the inner and outer reflecting surfaces 36, 38 are spaced apart from each other. It is noted that a direction DR3 in which the secondary reflected beam axis Z_{OUT'} is rotated relative to the primary reflected beam axis Z_{OUT} is the same as a direction DR4 in which the inner member 30 is rotated relative to the outer member 32.

When the inner member 30 is rotated relative to the outer member 30, the secondary reflected beam axis Z_{OUT'} of the first sub-beam L1 is rotated relative to the primary reflected beam axis Z_{OUT}, not only in the direction DR3 (direction DR4), but also in a direction DR5 in the first plane PL1, as indicated in the cross sectional view of Fig. 5C taken along line B-B of Fig. 5A. That is, the axis Z_{OUT'} of the first sub-beam L1 reflected by the inner reflecting surface 36 is rotated relative to the primary reflected beam axis Z_{OUT}, in the first plane PL1, about a straight line which extends through a point of incident of the incident laser beam L0 upon the inner reflecting surface 36 and which is perpendicular to the incident beam axis Z_{IN} and the primary reflected beam axis Z_{OUT}.

Thus, the counterclockwise rotation of the inner member 30 relative to the outer member 32 in the direction DR4 as indicated in Fig. 5A will cause not only counterclockwise rotation of the secondary reflected beam axis Z_{OUT'} relative to the primary reflected beam axis Z_{OUT} in the third plane PL3 as indicated in Fig. 5A, but also clockwise rotation of the secondary reflected beam axis Z_{OUT'} relative to the primary reflected beam axis Z_{OUT} in the first plane PL1 such that the axis Z_{OUT'} comes closer to the axis Z_{OUT}, as indicated in Fig. 5C.

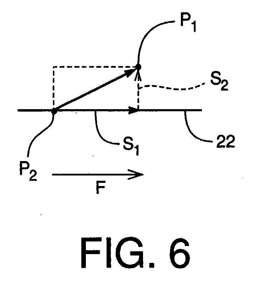

Therefore, the counterclockwise rotation of the inner member 30 as indicated in Fig. 5A will cause the spot P1 of the first sub-beam L1 to be spaced apart from the spot P2 of the second sub-beam L2 on the surface of the workpiece 18, as indicated in Fig. 6, such that the spot P1 is spaced from the point P2 not only by an offset distance S1 in a feeding or welding direction F in which the workpiece 18 is fed relative to the spots P1, P2 to perform a welding operation along the welding line 22, but also by an offset distance S2 in a direction perpendicular to the feeding direction F. The feeding direction F can be expressed by a negative value of a product (A x B) of a vector A and a vector B indicated in Fig. 4. The vector A represents the direction of propagation of the laser beam L0 along the incident beam axis Z_{IN}, while the vector B represents the direction of propagation of the second sub-beam L2 along the the primary reflected beam axis Z_{OUT}. That is, the feeding direction F is opposite to a direction in which a right-handed screw is advanced by rotation thereof in a direction in which the vector A is rotated, by an angle not larger than 180°, into alignment with the vector B.

To position the spot P1 of the first sub-beam L1 such that the spot P1 is spaced from the spot P2 only in the feeding direction F, the clockwise rotation of the secondary reflected beam axis Z_{OUT'} relative to the primary reflected beam axis Z_{OUT} should be cancelled by an axial movement of the inner member 30 relative to the outer member 32 in the direction of the incident beam axis Z_{IN} away from the laser beam 12. In other words, the axial movement as well as the rotary movement of the inner member 30 relative to the outer member 32 from their initial relative position is required to rotate the secondary reflected beam axis Z_{OUT'} in only the third plane PL3.

If the offset distance S2 of the spot P1 relative to the spot P2 in the direction perpendicular to the feeding direction F does not cause a problem in the laser welding operation with the spots P1, P2 being spaced from each other in the feeding direction F, it is not necessary to adjust the relative axial position of the inner and outer members 30, 32, and the incident laser beam L0 may be split into the first and second sub-beams L1, L2 by adjustment of only the relative angular position of the inner and outer members 30, 32.

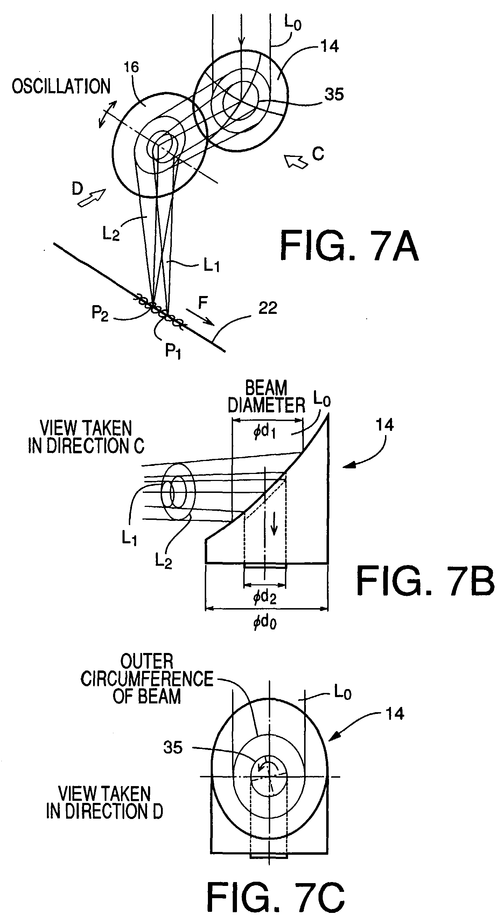

In the laser welding apparatus of the present embodiment, the welding operation is performed such that the first and second spots P1, P2 of the first and second sub-beams L1, L2 reflected by the inner and outer portions 36, 38 of the reflecting surface 34 of the parabolic mirror 14 are spaced from each other in the feeding direction F, parallel to the predetermined welding line 22, as indicated in Figs. 1 and 7A. To this end, the inner member 30 is not only rotated relative to the outer member 32, as indicated in Fig. 7C, so that the spot P1 of the first sub-beam L1 is spaced from the spot P2 of the second sub-beam L2 in the feeding direction F, but also axially moved relative to the outer member 32, as indicated in Fig. 7B, so that the inner reflecting surface 36 is moved relative to the outer reflecting surface 38 along the incident beam axis Z_{IN} in the direction away from the laser source 12. In this arrangement, the spot P1 is offset from the spot P2 in only the feeding direction F parallel to the welding line 22.

The area of the inner reflecting surface 36 is determined by a diameter d2 thereof as viewed in the transverse cross section, which diameter d2 is determined in relation to a diameter d1 of the laser beam L0 incident upon the reflecting surface 34 of the parabolic mirror 14. Described more specifically, the diameter d2 is determined so that the amount of energy of the first sub-beam L1 at its spot P1 is smaller than that of the second sub-beam L2 at its spot P2, and such that these energy amounts have a predetermined ratio.

The outer member 32 of the parabolic mirror 14 incorporates a cooling system having a water jacket network for cooling the inner and outer members 30, 32. The water jacket network has a passage formed through the outer member 32 in the circumferential direction thereof. The inner member 30 whose outer circumferential surface entirely contacts the inner circumferential surface of the outer member 32 can be effectively cooled by a coolant circulating through the water jacket network within the outer member 32.

The plane mirror 16 reflects the first and second sub-beams L1, L2 received from the parabolic mirror 14, toward the surface of the workpiece 18, as indicated in Fig. 1. This plane mirror 16 is positioned relative to the parabolic mirror 14 so that the sub-beams L1, L2 are reflected by the plane mirror 16, only in the first plane PL1.

The plane mirror 16 includes a mirror portion 70, and a mount 72 on which the mirror portion 70 is mounted. To the mount 72, there is attached one end of a support shaft 74 which extends parallel to the welding line 22. The support shaft 74 is attached at the other end to an oscillating device (first relative movement device) in the form of a galvanometer 76 fixedly mounted on the frame 11. The plane mirror 16 is oscillated about the axis of the support shaft 74, by the galvanometer 76, so that the spots P1, P2 of the two sub-beams L1, L2 are oscillated over a distance W in the direction perpendicular to the welding line 22, while maintaining a predetermined spacing distance d of the two spots P1, P2 in the direction of the welding line 22 (in the feeding direction F). The center of the oscillating stroke is substantially aligned with the welding line 22. As a result, each spot P1 is moved along a sinusoidal path in a welding operation of the apparatus with the workpiece 18 being fed in the feeding direction F. However, the sinusoidal path generally follows the predetermined welding line 22. It is noted that the sub-beams L1, L2 reflected from the oscillating mirror 16 reach the workpiece 18 through the interior space of a protector sleeve 78 attached to the frame 11.

The galvanometer 76 is controlled by a control device 80. The oscillating frequency and amplitude of the galvanometer 76 are controlled by the control device 80, to control the oscillating frequency and angle of the plane mirror 16.

The laser welding apparatus includes a workpiece feeding device 84 functioning as a second relative movement device, which is adapted to support the workpiece 18 (workpieces 18a, 18b butted together) and move the workpiece 18 in an X-axis direction and a Y-axis direction in a plane which is substantially perpendicular to the direction in which the first and second sub-beams L1, L2 from the plane mirror 16 are incident upon the workpiece 18. The workpiece feeding device 84 includes (a) a table 86 on which the workpiece 18 is fixed, (b) an X-axis positioning device 88 for moving the table 86 in the X-axis direction, and (c) a Y-axis positioning device 90 for moving the table 86 in the Y-axis direction. These positioning devices 88, 90 are also connected to and controlled by the control device 80, so as to feed the table 86 in the feeding direction F so that the center of oscillation of the spot P1, P2 of each sub-beam L1, L2 is moved on the welding line 22, and so that the spot P1 of the first sub-beam L1 having the relatively small energy precedes the spot P2 of the second sub-beam 12 having the relatively large energy.

The laser welding apparatus is further equipped with a Z-axis positioning device 92 for adjusting a vertical distance between the welding head 10 and the workpiece 18 in the Z-axis direction. The Z-axis positioning device 92 is adapted to move the welding head 10 for adjusting the vertical distance to a predetermined value while monitoring the vertical distance by a suitable sensor. In the present embodiment, the vertical distance between the welding head 10 and the workpiece 18 is adjusted so that the first and second sub-beams L1, L2 are focused at the spots P1, P2 on the upper surface of the workpiece 18, for irradiating respective local areas of the workpiece surface corresponding to the spots P1, P2, with sufficiently large laser beam energies. The irradiated local areas are moved by the feeding movement of the workpiece 18.

In the laser optical system employed in the welding head 10 of the present laser welding apparatus, the inner and outer members 30, 32 of the parabolic mirror 14 which have the respective inner and outer reflecting surfaces 36, 38 are axially movable and rotatable relative to each other, so that the distance d between the spots P1, P2 of the two sub-beams L1, L2 and the direction of spacing of these spots P1, P2 with respect to the feeding direction F of the workpiece 18 can be comparatively easily changed as needed, without having to change the parabolic mirror 14. Thus, the laser optical system and the laser welding apparatus have improved versatility.

In the present embodiment, the boundary between the inner and outer members 30, 32 having the respective inner and outer reflecting surfaces 36, 38 is provided by the cylindrical surface of the cylindrical bore 28, so that the amount of energy of the first sub-beam L1 at the spot P1 is less likely to be affected by a variation in the diameter of the first sub-beam L1 reflected by the inner reflecting surface 36, and can therefore be stabilized irrespective of the area of the inner reflecting surface 36, permitting the laser welding operation to be performed in the intended manner.

In the present apparatus, the position adjusting mechanism 46 is provided for the stationary parabolic mirror 14 consisting of the separate inner and outer members 30, 32, but not for the plane mirror 16 which is oscillated by the galvanometer 76. This arrangement permits the plane mirror 16 to be relatively light, assuring smooth oscillation of the plane mirror 16.

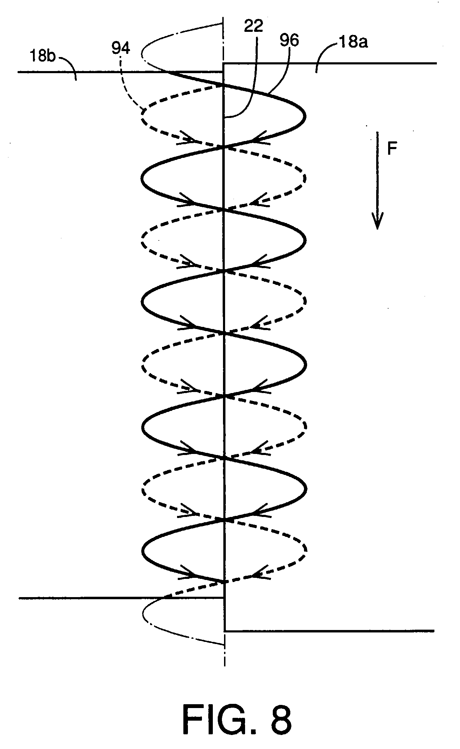

Further, the welding head 10 of the present apparatus is adapted such that the spots P1, P2 are moved along the predetermined welding line 22 while they are oscillated across the welding line 22, whereby the leading spot P1 and the trailing spot P2 take respective sinusoidal paths 94, 96 as indicated by solid and broken lines in Fig. 8, respectively. The velocity at which the spots P1, P2 are moved along the welding line 22 (in the feeding direction F) and the frequency of oscillation of these spots P1, P2 across the welding line 22 are determined so that the two sinusoidal paths 94, 96 intersect each other on the welding line 22. The paths 94, 96 intersect the welding line 22 at a predetermined interval in the direction parallel to the welding line 22, such that the waves of the two sinusoidal paths 94, 94 have a phase difference of 180°, namely, a phase difference corresponding to a half of the above-indicated interval, as is apparent from Fig. 8. The velocity of movement of each spot P1, P2 in the oscillating direction is maximum at the positions of intersection of the sinusoidal paths 94, 96 on the welding line 22, and therefore the amounts of energy of the sub-beams L1, L2 are minimum at the positions of intersection of the sinusoidal paths 94, 96. In this respect, it is noted that the local areas near the positions of intersection of the sinusoidal paths 94, 96 are irradiated by the two sub-beams L1, L2, but the energy amounts are minimum at these positions of intersection, whereby the workpiece 18 can be uniformly irradiated by the sub-beams L1, L2 over the entire oscillating distance W of the spots P1, P2, without reducing the movement velocity near the welding line 22, leading to improved welding stability and accuracy.

It is noted that the amount of energy of the sub-beam reflected by a smaller one of two or more divisions (36, 38) of the reflecting surface (34) of the parabolic mirror 14 is less likely to be affected by a variation in the diameter of the above-indicated sub-beam, provided the reflecting surface is divided into the divisions by at least one closed boundary line, irrespective of whether the parabolic mirror consists of two or more separate members which are displaceable relative to each other, that is, even where the parabolic mirror is an integral structure having two or more reflecting surfaces for splitting the incident laser beam into the respective two or more sub-beams.

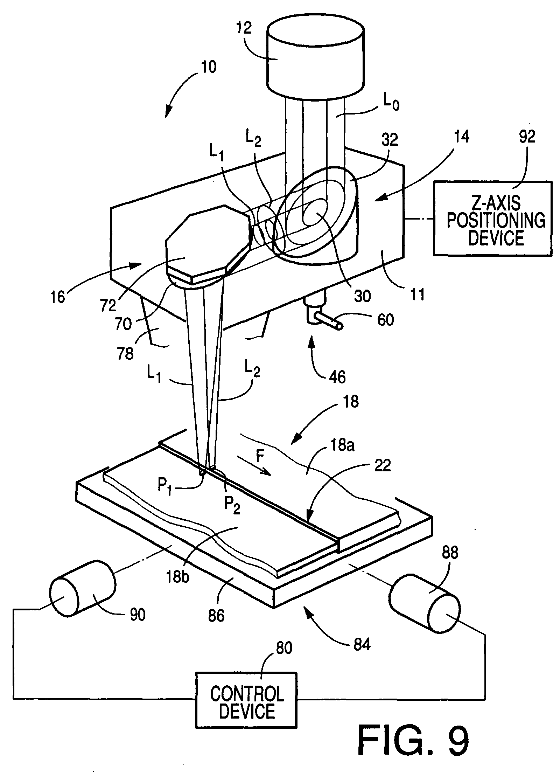

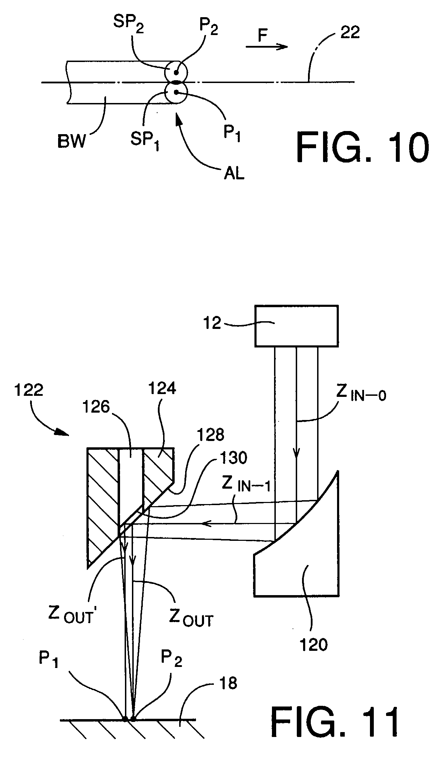

Referring next to Figs. 9 and 10, there will be described a second embodiment of this invention. Since most of the elements used in the second embodiment are similar to those of the first embodiment, the same reference signs as used in the first embodiment will be used in the second embodiment to identify the similar elements, and only such features that are characteristic of the second embodiment will be explained in contrast with the first embodiment.

While the laser welding apparatus of the first embodiment is adapted such that the spots P1, P2 of the two sub-beams L1, L2 are spaced apart from each other in the direction parallel to the welding line 22, as indicated in Fig. 1, the apparatus of the present second embodiment is adapted such that the inner member 30 of the parabolic mirror 14 is axially moved from the initial position in the direction away from the laser source 12, so that the centers of the two spots P1, P2 are spaced from each other in the direction perpendicular to the welding line 22, as shown in Figs. 9 and 10. Further, the welding head 10 and the table 86 of the workpiece feeding device 84 are positioned so that the two spots P1, P2 are located on the opposite sides of the welding line 22.

In the first embodiment, the areas of the reflecting surfaces 36, 38 of the inner and outer members 30, 32 of the parabolic mirror 14 are determined so that the first sub-beam L1 at the spot P1 has a smaller amount of energy than the second sub-beam L2 at the spot P2, and so that the energy amounts of these two sub-beams L1, L2 have a predetermined ratio. In the present second embodiment, however, the areas of the inner and outer reflecting surfaces 36, 38 are determined so that the first and second sub-beams L1, L2 at the respective spots P1, P2 have the same amount of energy.

In the first embodiment, the vertical distance between the welding head 10 and the surface of the workpiece 18 is adjusted by the Z-axis positioning device 92 so that the sub-beams L1, L2 are focused on the surface of the workpiece 18, and the spots P1, P2 are formed on the surface of the workpiece 18. In the present second embodiment, the vertical distance is adjusted by the Z-axis positioning device 92 so that the sub-beams L1, L2 are not accurately focused on the surface of the workpiece 18. Namely, the focal point of the sub-beams L1, L2 is vertically offset from the surface of the workpiece 18 on which the spots P1, P2 are formed. In this arrangement of the second embodiment, the spots P1, P2 on the surface of the workpiece 18 have a larger size or diameter than in the first embodiment.

In the first embodiment, the distance d between the centers of the two spots P1, P2 on the surface of the workpiece 18 is determined so that these spots P1, P2 are spaced apart from each other. In the present embodiment, the distance between the centers of the spots P1, P2 is determined so that areas SP1, SP2 of the spots P1, P2 partially overlap each other, as indicated in Fig. 10. The spot areas SP1, SP2 cooperate to form a generally elongate continuous area AL to be irradiated by the sub-beams L1, L2. This continuous irradiated area AL extends in the direction perpendicular to the welding line 22. With the continuous irradiated area AL being moved along the welding line 22, there is formed a weld bead BW along the welding line 22.

In the present second embodiment of Figs. 9 and 10, the welding head 10 does not include the galvanometer 76 employed in the first embodiment, and the plane mirror 16 is secured directly to the frame 11. That is, the present welding apparatus does not use a complicated mechanism having high operating accuracy for oscillating the plane mirror 16, and the cost of manufacture and the weight of the apparatus are accordingly reduced.

It is noted that the welding apparatus of the first embodiment may also be adapted such that the spots P1, P2 on the surface of the workpiece 18 are arranged in the direction perpendicular to the welding direction 22 while the distance d between the centers of the spots P1, P2 is adjusted so as to form the generally elongate continuous irradiated area AL. This arrangement is possible in the first embodiment, since the positions of the spots P1, P2 can be adjusted as desired, by suitably positioning the inner member 30 of the parabolic mirror 14 relative to the outer member 32 in the axial and circumferential directions, as described above with respect to the first embodiment.

It is further noted that the above arrangement which permits the weld beam to be formed at a relatively high speed without oscillating the two sub-beams across the welding line 22 is available without splitting an incident laser beam into two sub-beams. That is, the oscillation may be eliminated where a generally elongate area of the workpiece surface which extends in the direction perpendicular to the welding line is irradiated by two adjacent spots of two laser beams which are generated by respective two laser sources independently of each other.

A third embodiment of this invention will be described by reference to Fig. 11. Since this embodiment is more or less similar to the second embodiment of Fig. 9, only such features that are characteristics of this third embodiment will be described in contrast with the second embodiment.

In the first and second embodiments of Figs. 1 and 9, the parabolic mirror 14 includes the outer member 32 having the cylindrical center bore 28, and the inner member 30 which engages the cylindrical center bore 28 such that the inner and outer members 30, 32 are axially movable and rotatable relative to each other. The inner and outer members 30, 32 have the respective reflecting surfaces 36, 38 which cooperate with each other to provide the reflecting surface 34. In other words, the reflecting surface 34 of the parabolic mirror 14 has the inner and outer divisions 36, 38 provided by the separate inner and outer members 30, 32. These inner and outer reflecting surfaces 36, 38 function to divide the incident laser beam L0 into the first and second sub-beams L1, L2. Thus, the parabolic mirror 14 functions as the beam splitting mirror for splitting the incident laser beam L0 into the two sub-beams L1, L2.

On the other hand, the laser welding apparatus according to the present third embodiment of Fig. 11 uses a parabolic mirror 120 which merely functions to condense and reflect the incident laser beam L0. This parabolic mirror 120 is an integral structure. The laser beam L0 reflected by the parabolic mirror 120 is incident upon a plane mirror 122 which includes an outer member 124 and an inner member 126. The outer member 124 has a cylindrical center bore in which the inner member 126 is fitted such that the outer and inner members 124, 126 are axially movable and rotatable relative to each other. The outer and inner members 124, 126 have respective outer and inner reflecting surfaces 128, 130 which cooperate with each other to form a plane reflecting surface. Thus, the plane mirror 122 functions as a beam splitting mirror for splitting the laser beam L0 into the two sub-beams L1, L2.

In the first and second embodiments, the cylindrical center bore 28 of the outer member 32 has the axis aligned with the incident beam axis Z_{IN} (Fig. 2), which is indicated as Z_{IN-0} in Fig. 11. The inner and outer members 30, 32 are movable relative to each other along the axis Z_{IN} and rotatable relative to each other about the axis Z_{IN}. In the present third embodiment of Fig. 11, the cylindrical center bore of the outer member 124 of the plane mirror 122 functioning as the beam splitting mirror 122 has the axis aligned with the primary reflected beam axis Z_{OUT}, and the outer and inner members 124, 126 are movable relative to each other along the axis Z_{OUT} and rotatable relative to each other about the axis Z_{OUT}. The plane mirror 122 is provided with a position adjusting mechanism similar to the mechanism 46 used for the parabolic mirror 14 in the first and second embodiment. With the position adjusting mechanism being suitably manipulated, the reflecting surface 130 of the inner member 126 can be moved along the axis Z_{OUT} relative to the axis Z_{IN-1} of the laser beam L0 incident upon the plane mirror 122, and the angle of the secondary reflected beam axis Z_{OUT'} of the sub-beam L1 reflected by the inner reflecting surface 130 can be changed relative to the axis Z_{IN-1}.

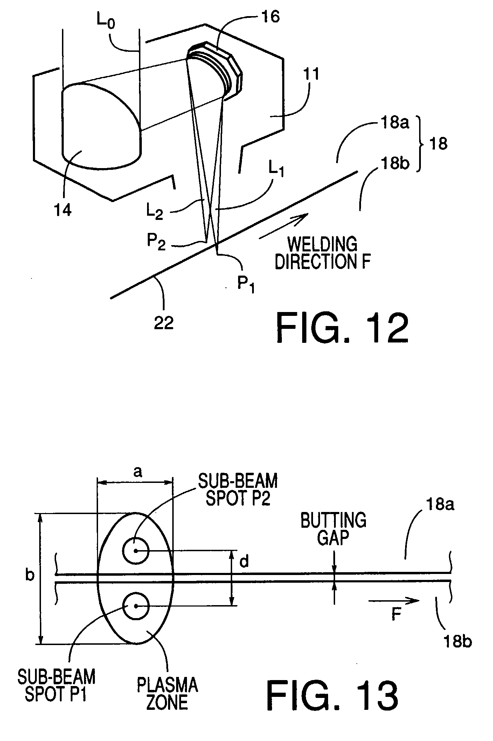

Reference is now made to Figs. 12-18, a fourth embodiment of the present invention will be described. The laser welding apparatus according to this fourth embodiment is basically identical with the apparatus of the second embodiment of Figs. 9-10, except for the setting of the spacing distance d between the centers of the two sub-beam spots P1, P2. The same reference signs as used in the second embodiment will be used in this fourth embodiment, to identify the corresponding elements, which will not be described in detail.

As shown in Fig. 12, the laser welding apparatus constructed according to the fourth embodiment includes the parabolic beam splitting mirror 14 which receives the laser beam L0 (carbon dioxide gas laser) generated by a suitable laser source (not shown), and the plane mirror 16 which receives the two sub-beams L1, L2. As in the second embodiment of Fig. 9, the parabolic mirror 14 has a circular reflecting surface consisting of the inner and outer divisions provided by the respective inner and outer members 30, 32. The relative position of the inner and outer members 30, 32 in the axial and circumferential directions is determined so that the spots P1, P2 of the two sub-beams L1, L2 reflected by the plane mirror 14 are located on the opposite sides of the welding line 22 on the surface of the workpiece 18, and so that the spots P1, P2 are spaced apart from each other in the direction perpendicular to the welding line 22.

In a common laser welding operation, a local portion of the workpiece irradiated by a laser beam is heated so as to produce plasma, which tends to absorb the energy of the laser beam, preventing the energy from being transferred to the irradiated portion of the workpiece. In the light of this tendency, there have been proposed a technique for preventing the generation of plasma, and also a technique for effectively utilizing the heat of the plasma. The present embodiment is adapted to practice the latter technique.

In a butt welding operation, a butting gap may exist between two workpieces which are butted together. In this case, it is important to prevent a laser beam from passing the butting gap during the butt welding operation. A passage of the laser beam through the butting gap is likely to cause an undercut or other welding failure due to insufficient transfer of the laser beam energy to the two workpieces.

In the present embodiment, the spacing distance d between the centers of the spots P1, P2 of the two sub-beams L1, L2 is determined so that the spots P1, P2 formed on the surfaces of the two workpieces 18a, 18b are entirely located within the surfaces of the respective workpieces 18a, 18b, as indicated in Fig. 13. That is, the spacing distance d is determined so that the periphery of each spot P1, P2 is inwardly spaced from the end face of the corresponding one of the workpiece 18a, 18b butted together. In the present embodiment in which the inner and outer reflecting surfaces of the parabolic mirror 14 have a circular shape and an annular shape, respectively, both of the spots P1, P2 are circular in shape, as indicated in Fig. 13.

The spacing distance d between the centers of the spots P1, P2 is also determined so that the plasmas produced by irradiation of the local areas of the workpieces 18a, 18b by the sub-beams L1, L2 coalesce to generate a continuous plasma zone, in the form of an ellipse having dimensions a and b along the minor and major axes, as shown in Fig. 13, for example.

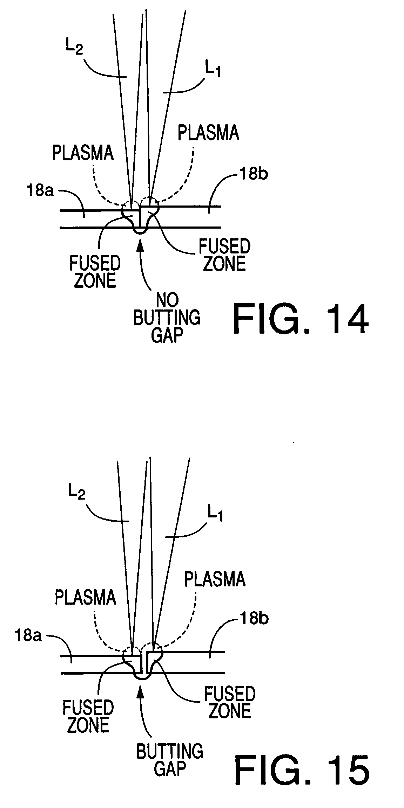

According to the present embodiment, the two workpieces 18a, 18b are suitably welded together with the plasmas and fused zones being generated at the butting interface of the workpieces, irrespective of whether a butting gap is absent at the butting interface as shown in Fig. 14, or present as shown in Fig. 15. Namely, the present welding apparatus permits excellent butt welding of the workpieces 18a, 18b even where there exists some butting gap therebetween.

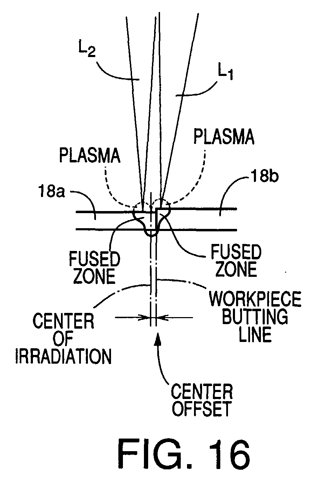

Further, the present welding apparatus permits excellent butt welding of the workpieces 18a, 18b even where the center of irradiation of the workpieces (the midpoint between the centers of the spots P1, P2) is misaligned with or offset from the butting line of the workpieces 18a, 18b, as indicated in Fig. 16, as well as where the center of irradiation is aligned with the butting line.

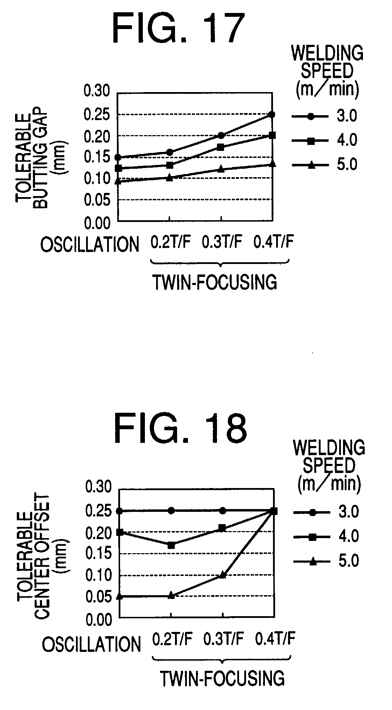

Referring to the graphs of Figs. 17, 18, there are shown results of tests wherein two thin steel plates were butt-welded by the laser welding apparatus according to the fourth embodiment of Figs. 12-15. The graph of Fig. 17 shows a tolerable butting gap of the steel plates, that is, a maximum butting gap at which the butt welding was conducted with a satisfactory result. The graph of Fig. 18 shows a tolerable center offset distance between the center of irradiation and the butting line, that is, a maximum center offset distance at which the butt welding was conducted with a satisfactory result. The graphs of Figs. 17 and 18 also show results of tests using the apparatus of Fig. 1. The results labelled "OSCILLATION" are those of the Fig. 1 apparatus, while the results labelled "TWIN-FOCUSING" are those of the apparatus of the present fourth embodiment.

The tests on the present apparatus were conducted under different combinations of welding conditions. The welding conditions include: thickness of the steel plates; output of carbon dioxide gas laser; welding speed; focal length of the laser beam; and de-focusing amount of the laser beam. The de-focusing amount is represented by T/F, where "F" represents the focal length of the parabolic mirror 14, while "T" represents a difference of the distance between the parabolic mirror 14 and the surfaces of the steel plates, from the focal length F. The above difference is equal to a vertical distance between the steel plate surfaces and the focal point of the sub-beams. In the presence of the de-focusing amount T/F, the focal point of the sub-beams is vertically offset from the steel plate surfaces on which the sub-beam spots are formed. The de-focusing amount T/F influences the size of the spots of the sub-beams on the surface of the steel plates. Described more specifically, the size of the sub-beam spots increases with an increase in the de-focusing amount T/F. In the tests, the welding speeds and the de-focusing amount T/F were changed. The test were conducted under the following conditions, for the apparatus of Fig. 12:
Thickness (mm) of steel plates: 1.0
Welding speed (m/min.): 3.0; 4.0; and 5.0
Laser output (kW): 3.0
Focal length 9mm): 254
De-focusing amount T/F: 0.2; 0.3; and 0.4

The tests on the apparatus of Fig. 1 were conducted with the de-focusing amount T/F being 0.2.

It will be understood from the graph of Fig. 17 that the tolerable butting gap in the present apparatus of Fig. 12 is equal to or larger than that in the apparatus of Fig. 1. This improvement of the tolerable butting gap in the present apparatus is considered to result from the prevention of the sub-beams from passing through the butting gap of the steel plates, and the consequent increase in the volume of the fused metal at each of the irradiated local portions on the opposite sides of and adjacent to the butting gap. The fused metal forms a bridge between the irradiated local portions, which serves to fill the butting gap.

It will be understood from the graph of Fig. 18 that the tolerable center offset amount in the present apparatus is equal to or larger than that in the apparatus of Fig. 1. This improvement of the tolerable center offset amount in the present apparatus is considered to result from the elliptical plasma zone and fused zone, which generally extends in the direction perpendicular to the butting line of the steel plates.

Thus, the present welding apparatus does not require the plane mirror 16 to be oscillated at a high frequency to oscillate the spots P1, P2 of the sub-beams L1, L2 across the welding line 22, for the purpose of improving the tolerable butting gap and the tolerable center offset amount. Accordingly, the present apparatus does not require a complicated and costly device for oscillating the plane mirror 14, as used in the apparatus of Fig. 1, whereby the cost of the apparatus is reduced, and the life expectancy of the apparatus is prolonged.

Since the tolerable butting gap and center offset amount are increased in the present apparatus according to the fourth embodiment of the invention, the maximum welding speed can also be increased, as compared with that of the apparatus using the beam oscillating device, and the welding efficiency is accordingly improved.

It will be further understood from the graphs of Figs. 17 and 18 that the tolerable butting gap and center offset amount increase with an increase in the de-focusing amount T/F.

As described above, the laser welding apparatus of Fig. 12 is adapted to practice a laser welding method wherein local portions of two workpieces butted together at their end faces are irradiated b respective spots of laser beams whose centers are spaced from each other in the direction perpendicular to the predetermined welding line, and the laser beam spots are moved on the surfaces of the two workpieces along the welding line, so as to butt weld the two workpieces along the welding line, and wherein the distance between the centers of the spots of the laser beams is determined so that each spot is entirely located inwardly of the end face of the corresponding workpiece and so that the plasmas generated by irradiation of the local portions of the workpieces by the two laser beams coalesce to generate a continuous plasma zone extending across the butting line of the workpieces. However, this laser welding method may be practiced by a laser welding apparatus which does not use a beam splitting mirror of the type which includes separate members for providing two or more reflecting surfaces, such as the beam reflecting and splitting parabolic mirror 14 used in the embodiments of Fig. 1, Fig. 9 and Fig. 12, or the beam splitting plane mirror 122 used in the embodiment of Fig. 11.

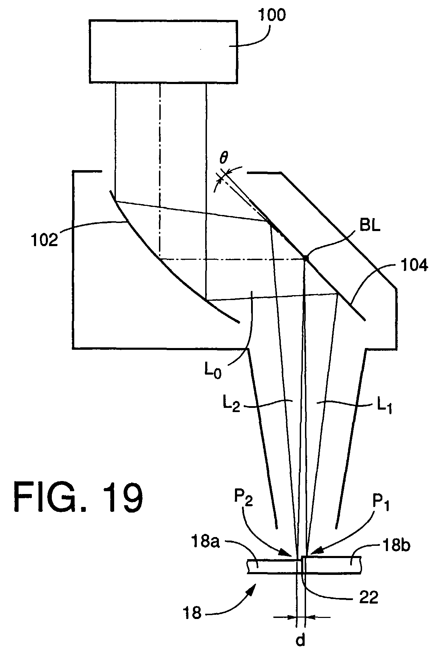

For instance, the above laser welding method may be practiced by an apparatus as shown in Fig. 19, which is constructed according to a fifth embodiment of this invention.

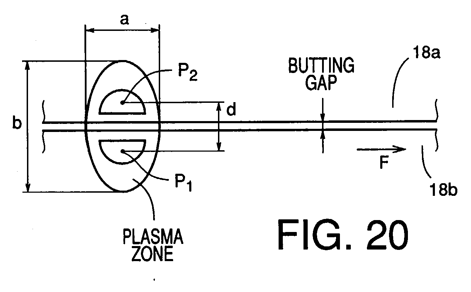

The laser welding apparatus of Fig. 19 includes a laser source 100, a condensing and reflecting parabolic mirror 102, and a plane mirror 104, which are arranged in this order along an optical path. The plane mirror 104 functions as a beam splitting mirror for splitting a laser beam L0 into two sub-beams L1, L2 having different optical axes. Described in detail, the plane mirror 104 has a circular reflecting surface consisting of two divisions bounded by a straight line BL extending in a diametric direction of the circle of the reflecting surface, which is parallel to the welding line 22. The two divisions of the reflecting surface are two straight or flat surfaces which are inclined with respect to each other by a predetermined angle θ such that the boundary straight line BL forms an edge. The laser beam L0 reflected by the parabolic mirror 102 is reflected and divided by the plane mirror 104 into the two sub-beams L1, L2 such that the axes of the sub-beams L1, L2 are inclined by about 90° with respect to the axis of the laser beam incident upon the plane mirror 104. The spots P1, P2 of the sub-beams L1, L2 on the surface of the workpiece 18 are spaced from each other in the direction perpendicular to the welding line 22, as indicated in Fig. 20. The spots P1, P2 have a semicircular shape, as shown in Fig. 20, since the reflecting surface of the plane mirror 104 is divided by the straight boundary line BL into the two semicircular divisions. In this fifth embodiment, too, the distance d between the centers of the two spots P1, P2 is determined so that the plasmas generated at the irradiated local portions of the workpiece 18 corresponding to the spots P1, P2 cooperate to form an elliptical plasma zone, as also indicated in Fig. 20.

It is noted, however, that the butt welding method indicated above may be practiced by an apparatus which does not use any type of beam splitting mirror for splitting a laser beam into sub-beams. For instance, the method may be practiced by an apparatus wherein a laser beam is split into sub-beams by suitable means other than a splitting mirror, or wherein a plurality of laser beams are generated by respective laser sources.

In the embodiments of Figs. 1, 9 and 12, the inner and outer reflecting surfaces 36, 38 cooperate with each other to define the single continuous parabolic parabolic reflecting surface (34) of the parabolic mirror 14, when the relative axial and circumferential positions of the inner and outer members 30, 32 are suitably controlled. Similarly, the outer and inner reflecting surfaces 128, 130 of the plane mirror 122 in the embodiment of Fig. 11 cooperate with each other to define the single continuous plane reflecting surface when the relative axial and circumferential positions of the outer and inner members 124, 126 are suitably controlled. However, the inner and outer reflecting surfaces need not be adapted to be able to define a single continuous reflecting surface. For instance, one and the other of the inner and outer reflecting surfaces may be a flat surface and a parabolic surface, respectively.

While the presently preferred embodiments of the present invention have been described in detail by reference to the accompanying drawings, it is to be understood that the invention may be embodied with various other changes, modifications and improvements, which may occur to those skilled in the art, without departing from the scope of the invention defined in the following claims:

Laser optical system including a laser source (12) for generating a laser beam (L0), and a beam splitting mirror (14, 122) for splitting the generated laser beam into a plurality of sub-beams (L1, L2) having respective different optical axes, the beam splitting mirror having a reflecting surface (34) consisting of a plurality of divisions corresponding to the sub-beams, and including a plurality of separate members (30, 32, 124, 126) which are assembled so as to provide the divisions (36, 38, 128, 130) of the reflecting surface, respectively. Also disclosed are laser welding apparatus and method using the laser optical system.

## Claims

1. A laser optical system including a laser source for generating a laser beam, and a beam splitting mirror for splitting the laser beam generated by said laser source into a plurality of sub-beams having respective different optical axes, said beam splitting mirror having a reflecting surface including a plurality of divisions corresponding to said plurality of sub-beams, said laser optical system being characterised in that:
said beam splitting mirror (14, 122) includes a plurality of separate members (30, 32, 124, 126) which are assembled so as to provide said plurality of divisions (36, 38, 128, 130) of said reflecting surface (34), respectively.

2. A laser optical system according to claim 1, wherein said plurality of separate members are constructed and assembled so as to permit a change in at least one of (a) an angle of an axis (Z_{OUT}, Z_{OUT'}) of each of at least one of said plurality of sub-beams (L1, L2) with respect to an axis (Z_{IN}, Z_{IN-1}) of the laser beam (L0) incident upon said reflecting surface (34) of said beam splitting mirror (14, 122), and (b) a relative position of said plurality of divisions (36, 38, 128, 130) in a direction of said axis of said laser beam incident upon said reflecting surface.

3. A laser optical system according to claim 1, wherein said plurality of separate members provide at least one planar boundary surface intersecting said reflecting surface of said beam splitting mirror, so as to define at least one straight line of intersection therebetween, said at least one straight line of intersection serving as at least one straight boundary line which divides said reflecting surface into said plurality of divisions.

4. A laser optical system according to claim 1 or 2, wherein said plurality of separate members (30, 32, 124, 126) provides at least one cylindrical boundary surface (28) intersecting said reflecting surface (34) of said beam splitting mirror (14, 122), so as to define at least one loop (35) of intersection therebetween, said at least one loop serving as at least one boundary loop which divides said reflecting surface into said plurality of divisions.

5. A laser optical system according to claim 4, wherein said beam splitting mirror consists of a parabolic mirror (14) having a parabolic reflecting surface (34) for condensing and reflecting the incident laser beam (L0), said parabolic mirror including an outer member (32) having a cylindrical center bore (28), and an inner member (30) which is fitted in said cylindrical center bore such that said inner and outer members are displaceable relative to each other, said outer member providing an annular outer reflecting surface (38) while said inner member providing a circular inner reflecting surface (36) which cooperates with said annular outer reflecting surface to form said parabolic reflecting surface of said parabolic mirror.

6. A laser optical system according to claim 4, wherein said beam splitting mirror consists of a plane mirror (122) having a flat reflecting surface for reflecting the incident beam (L0), said plane mirror including an outer member (124) having a cylindrical center bore, and an inner member (126) which is fitted in said cylindrical center bore such that said inner and outer members are displaceable relative to each other, said outer member providing an annular outer reflecting surface (128) while said inner member providing a circular inner reflecting surface (13) which cooperates with said annular outer reflecting surface to form said flat reflecting surface of said plane mirror.

7. A laser optical system according to any one of claims 1-6, further including a position adjusting mechanism (46) for adjusting a relative position of said plurality of separate members (30, 32. 124, 126) of said beam splitting mirror (14, 122).

8. A laser welding apparatus for welding together two workpieces (18a, 18b) with a laser, characterised by comprising:
a welding head including a laser optical system defined in any one of claims 1-7, for forming spots (P1, P2) of said plurality of sub-beams (L1, L2) on surfaces of said two workpieces, such that said spots have centers which are spaced apart from each other; and
a relative movement device (76, 84) for moving said spots of said plurality of sub-beams and said two workpieces relative to each other.

9. A laser welding apparatus according to claim 8, wherein said relative movement device comprises a feeding device for effecting a relative movement of said spots of said plurality of sub-beams and said two workpieces such that said spots are moved relative to said two workpieces, in a direction parallel to a predetermined welding line (22) along which said two workpieces are welded together.

10. A laser welding apparatus according to claim 8 or 9, wherein said relative movement device comprises an oscillating device (76) for effecting a relative movement of said spots of said plurality of sub-beams and said two workpieces such that said spots are oscillated in a direction intersecting a predetermined welding line (22) along which said two workpieces are welded together, and such that a center of an oscillating stroke of each of said spots is substantially aligned with said welding line.

11. A laser welding apparatus according to any one of claims 8-10, further comprising a positioning device (92) for adjusting a distance between said welding head (10) and the surfaces of said two workpieces (18a, 18b).

12. A laser welding method of welding together two workpieces (18a, 18b) with a laser, by using a laser welding apparatus defined in any one of claims 8-11.

13. A laser welding method according to claim 12, wherein said plurality of sub-beams consist of two sub-beams (L1, L2) reflected by respective two divisions (36, 38) of said beam splitting mirror (14), and the spots (P1, P2) of said two sub-beams are arranged in a direction parallel to a predetermined welding line (22) along which said two workpieces are welded together, said spots being spaced apart from each other in said direction parallel to said predetermined welding line, and fed by said relative movement device (84) relative to said two workpieces along said welding line.

14. A laser welding method according to claim 12, wherein said plurality of sub-beams consist of two sub-beams (L1, L2) reflected by respective two divisions (36, 38) of said beam splitting mirror (14), and the spots (P1, P2) of said two sub-beams are arranged in a direction parallel to a predetermined welding line (22) along which said two workpieces are welded together, said spots being spaced apart from each other in said direction parallel to said predetermined welding line, said spots being fed relative to said two workpieces along said welding line while being oscillated across said welding line, by said relative movement device (76, 84).

15. A laser welding method according to claim 14, wherein said spots are moved along respective two paths on the surfaces of said two workpieces such that each of said two paths intersects said welding line at a predetermined interval in said direction parallel to said welding line, said two paths having a phase difference corresponding to a half of said predetermined interval.

16. A laser welding method according to claim 12, wherein said plurality of sub-beams consist of two sub-beams (L1, L2) reflected by respective two divisions (36, 38) of said beam splitting mirror (14), and the spots (P1, P2) of said two sub-beams are arranged in a direction intersecting a predetermined welding line (22) along which said two workpieces are welded together, said spots having centers on opposite sides of said welding line, and being fed by said relative movement device (84) relative to said two workpieces in a direction parallel to said welding line.

17. A laser welding method according to claim 16, wherein a distance between said welding head (10) and the surfaces of said two workpieces (18a, 18b) is determined to be different from a focal length of said two sub-beams (L1, L2), so that a focal point of the two sub-beams is offset from the surfaces of the two workpeices on which the spots (P1, P2) of the two sub-beams are formed, and wherein a spacing distance between the centers of said spots is determined such that the spots of the two sub-beams are at least continguous with each other, and cooperate to form a continuous area (AL) of irradiation by the sub-beams, which area extends across said welding line.

18. A laser welding method according to claim 16, wherein said two workpieces (18a, 18b) have respective end faces and are butt-welded together at said end faces and along said welding line (22), a spacing distance between the centers of the spots (P1, P2) of said two sub-beams (L1, L2) being determined such that said spots are located on opposite sides of said welding line and inwardly of said end faces, respectively.

19. A laser welding method according to claim 16 or 18, wherein two workpieces (18a, 18b) have respective end faces and are butt-welded together at said end faces and along said welding line (22), a spacing distance between the centers of the spots (P1, P2) of said two sub-beams (L1, L2) being determined such that plasmas generated by irradiation of local portions of said surfaces of the workpieces by said two sub-beams coalesce to form a substantially continuous plasma zone.
